# EUROPEAN PATENT SPECIFICATION

(11) **EP 4 060 451 B1**
(45) Date of publication and mention of the grant of the patent: **27.08.2025**
(21) Application number: 22162256.6
(22) Date of filing: 15.03.2022
(51) Int. Cl.: G05D 23/19

(54) **TEMPERATURE-ADJUSTING POSITIONING DEVICE AND METHOD**
TEMPERATUREINSTELLENDE POSITIONIERVORRICHTUNG UND -VERFAHREN
DISPOSITIF ET PROCEDE DE POSITIONNEMENT AJUSTABLE EN TEMPERATURE

(30) Priority: 15.03.2021 DE 102021106265
(43) Date of publication of application: 21.09.2022
(73) Proprietor: SmarAct Holding GmbH, 26135 Oldenburg (DE)
(72) Inventor: Heinemann, Marc, 26129 Oldenburg (DE); Rode, Sebastian, 49624 Löningen (DE)
(74) Representative: Eisenführ Speiser

(56) References cited:
- EP-A1- 3 179 203
- JP-A- H 075 925
- US-A1- 2013 181 387
- ZHOU CHAO ET AL: "A Closed-Loop Controlled Nanomanipulation System for Probing Nanostructures Inside Scanning Electron Microscopes", IEEE/ASME TRANSACTIONS ON MECHATRONICS, IEEE SERVICE CENTER, PISCATAWAY, NJ, US, vol. 21, no. 3, 1 June 2016 (2016-06-01), pages 1233 - 1241, XP011611241, ISSN: 1083-4435, [retrieved on 20160502], DOI: 10.1109/TMECH.2016.2533636

## Description

The present invention relates to closed-loop positioning of an object and specifically to a positioning device allowing for a closed-loop positioning of an object, a method for closed-loop positioning of an object and a computer program for a control unit of a positioning device allowing for a closed-loop positioning.

Precise and preferably very precise positioning of materials/devices or manipulating tools thereof are of crucial importance during manufacturing and analyzing of micro- and nano-technology materials/devices. In many cases, it is necessary to have a closed loop position control of the position actuators to allow stable, reproducible and eventually automated positioning.

However, if the system is in direct or indirect contact with heat sources, as for example electronics, mechanical setups or light sources, the temperature of the positioning system, unless stabilized, would typically vary over time leading to a thermal expansion of the materials used in the positioning system. Such thermal expansion leads to an unstable and unreproducible determination of the absolute position of the material/device which has to be positioned. An increase in the temperature of position sensors and position actuators particularly leads to a thermal drift of the whole positioning system.

Conventionally, such thermal drift cannot be correctly sensed by the position sensors, since the measurement itself is effected by thermal drifts. Therefore, conventionally, it is necessary to stabilize the overall temperature of the positioning system in order to eliminate the thermal drift. This can be achieved by monitoring the actuator temperature and actively heating or cooling the device to stabilize/adjust the temperature. However, since many positioning systems are complex and have poor thermal conductivity between the different positioning elements, it is necessary to place sufficient amounts of sensors and heating/cooling elements to achieve a homogeneous and stable temperature profile over the whole system. Further, in many situations it is not an option to induce additional heat into the system if the final stabilized temperature (even without adjustment, under the assumption of a basically constant input of heat and a stable heat loss, the system would reach its own equilibrium temperature) is required to be close to the room temperature. In many cases, cooling is not an option as well because the cooling elements require additional space which is often limited. In any case, additional heating/cooling elements require additional wires, which is especially for vacuum systems difficult, because of the need of additional feedthroughs. Additional cables and feedthroughs effect both the performance (out-gassing-behavior) and overall price of the system in a negative way.

Conventional approaches in view of the difficulties indicated above include an abandonment of the concept of a closed-loop positioning, e.g. using an open loop positioning system, in which the position is determined by vision (e.g. by means of a microscope) and the position is set or adjusted manually. However, solutions operating without positioning sensors do not allow positioning in closed-loop control and thus do not allow stable, reproducible and automated positioning.

In EP 3 179 203 A1 an articulating probe head is disclosed for a measuring system comprising cooling systems. The cooling elements are modulated in response to the temperature of or the power dissipated in the probe head such that its temperature remains stable during operation.

As an alternative to the above, it may be attempted to reduce the overall input of heat into the system (see, for example, Zhou, Chao, et al. "A closed-loop controlled nanomanipulation system for probing nanostructures inside scanning electron microscopes." IEEE/ASME Transactions on Mechatronics 21.3 (2016): 1233-1241), i.e. by using elements with lower power consumption, while this typically involves detrimental effects on the overall performance. Solutions with alternative, low power consuming elements (e.g. position sensors) have to use elements which are less ideally suited for the task of exact positioning. Furthermore, even such lower thermal input leads to an unstable temperature over time, while there is also no concept involved for addressing or correcting other thermal effects.

An aim underlying the present invention is to address problems involved with a thermal drift of a closed-loop positioning system while maintaining the benefits of such closed-loop approach also under difficult conditions like limited space and/or vacuum and/or cryogenic environments.

Thus, there is a desire to have a positioning device allowing for a closed-loop positioning of an object and a method for closed-loop positioning of an object with reduced or even minimized thermal drift during operation, while avoiding an increase in size or constructional complexity.

According to a first aspect of the invention, a positioning device is proposed as defined in claim 1, in particular a positioning device allowing for a closed-loop positioning of an object, comprising an actuator arranged for positioning the object, a position sensor arranged for directly or indirectly detecting a position of the object, and a control unit arranged for controlling an operation state of the position sensor, wherein the position sensor has at least two operation states which differ in the amount of heat generated by the position sensor in such operation state, and wherein the control unit is arranged for controlling the operation state of the position sensor so to adjust a temperature of the positioning device

According to a second aspect of the invention, a method for closed-loop positioning of an object is proposed as defined in claim 11, in particular a method for closed-loop positioning of an object, comprising positioning the object by means of an actuator, detecting, directly or indirectly, a position of the object by means of an position sensor, the position sensor having at least two operation states which differ in the amount of heat generated by the position sensor in such operation state, and controlling an operation state of the position sensor so to adjust a temperature of a positioning device used for positioning the object.

In the context of the present invention, it was realized that, while the position sensor used for the closed-loop position control is, by itself, also a common heat source, in addition to external heat sources (e.g. in case of optical encoders, which contain an LED and a photodiode, whose electric power consumption leads to the generation of heat within the encoders), which (in the conventional approaches) contributes, in particular in view of the typically rather close arrangement of position sensor and the position actuator, to an increase of temperature of the position actuators and subsequently to a thermal drift of the whole positioning system, a control of the heat generated by the position sensor (in a very simple way by switching the position sensor selectively on and off, for example) allows also for a control of the temperature of the positioning device or system.

This invention reduces or even eliminates a need for additional heating/cooling elements, as the inherent heat source of each closed-loop positioning element, the position sensors, is used to stabilize their temperature by controlling the heat output of the positioning sensor. To achieve this, the position sensors may, for example, operate with a duty cycle, with an adjustable ratio between the times when the sensor is active and powered and when the sensor is inactive and unpowered. To allow for an efficient heating or cooling due to an increase or decrease of the duty ratio, the heat input from the sensors has to be larger than other external fluctuating heat sources (electronics, light sources, etc.). This makes optical encoders ideally suited for this invention.

When implemented accordingly, the present invention allows for a (reasonably) quick stabilization of the positioning actuator temperature even at a level close to room temperature while also compensating for external fluctuating heat sources.

It was found that one can control the heat generation of a position sensor to stabilize the overall temperature of the positioning device close to the surrounding room temperature, while still maintaining its positioning functionality. This allows drift-free positioning (or at least positioning with reduced drift) without additional heating or cooling. An underlying realization of the present invention is to transform the (conventionally perceived) drawback of heat generation of the position sensor to the advantage that the system can be temperature stabilized without changing or adding any special, mechanical or electrical constrains of the system, and without greatly impacting the price.

In particular, the present invention allows to adjust the temperature of the positioning device, e.g. to a predetermined temperature value, within a particular range or following a predefined development over time, while still allowing for the performance of closed-loop positioning at the same time.

In comparison to conventional approaches which operate without positioning sensors in order to reduce the heat input, the present invention allows a closed-loop control of the position, which enables stable, reproducible and automated positioning. In addition, the present invention allows for quickly stabilizing the temperature of the positioning actuator and for compensating for external fluctuating heat sources.

In comparison to conventional approaches which operate with external heating/cooling devices, the current invention reduces the overall heat input and avoids cost increases due to the (now unnecessary) heating/cooling devices. Further the invention avoids a need for extra cables, which is especially important in vacuum applications.

In comparison to conventional approaches with alternative, low power consuming position sensors, the current invention allows the use of highly precise optical position sensors without being constraint in terms of power consumption, while the invention also allows to quickly stabilize the temperature of the positioning actuator and to compensate for external fluctuating heat sources.

In a quite simple implementation of the present invention, the duty cycle of the position sensor is controlled all the time, while a more advanced variant provides for setting the duty cycle to 100% during the performance of movements. This guarantees flawless movements, but leads to an increasing temperature during the movement. In particular, for applications with few movements, which require fast response of the positioning system, this would be a beneficial option.

While one aspect of the present invention provides that the temperature of the system (or device) is held or maintained at a particular value (or within a, preferably small, range around such value), the invention can also be used to cycle or otherwise change the temperature in a controlled fashion.

In order to provide for a temperature below the surrounding temperature, merely controlling the introduced amount of heat is not sufficient, so that for implementations which require to cool the system at a temperature below the surrounding temperature, a cooling element like a peltier cooling device may be added to the system. Due to the ability of temperature control directly at the position sensor and position actuator according to the present invention, the overall system may also be cooled (this was, in conventional system, not as effective as the excessive heat generated in the system had to "transported" out by heat conduction or convenction).

The present invention can be employed beneficially in the context of, for example, nanopositioning, electron microscopy, vacuum applications, characterization of nanomaterials and/or lithography.

The invention is further not limited to positioning device allowing a positioning of an object with a single degree of freedom (e.g. a linear positioning device for positioning the object along one dimension or a rotational positioning device for positioning the object on a circular path around an axis), but may also be employed in more complicated arrangements like a three-dimensional positioning device (XYZ-tower), wherein, for example, the object may be a tool for manipulation, or a positioning device having six degrees of freedom (three as to translation and three as to rotation), wherein the object may be, for example, a stage to be positioned.

Depending on implementational details and/or constraints in use, such positioning device or system for multiple degrees of freedom may be formed by individual positioning devices (at least one of which being provided according to the invention) or by combining multiple actuators and position sensors with a common control unit.

In case using at least one temperature sensor and having of multiple position sensors, the relation between such multiple position sensors may result in a thermal coupling allowing for an assumption that either the measure temperature at or for one position sensor applies also to the other position sensors or that there is a known relation between the different temperatures of or for different position sensors, so that the control unit may use such single temperature reading for individually controlling the operation states of the separate position sensors.

In an advantageous embodiment of an aspect of the invention, the at least two operation states include an active state in which the position sensor detects the position of the object and generates heat and an inactive state in which the position sensor is unpowered and generates no heat or substantially no heat.

The invention is, however, not limited to just such two operation states. It is also considered that there might be further operation states of the position sensor with different amounts of heat generation.

In a further advantageous embodiment of an aspect of the invention, the control unit is arranged to switch between operation states of the position sensor in accordance with an operation of the actuator.

Preferably, during operation of the actuator, i.e. during movement of the object, the position sensor should be active and operational, while it is, however, also conceivable that an intermittent operation of the position sensor during movement may yield sufficiently good results for certain applications.

If there are multiple periods of movement interspersed with periods of no movement, such sequence may be synchronized with the switching of the operation states of the position sensor, which would then be switched off, for example, during the periods of no movement.

In a further advantageous embodiment of an aspect of the invention, the control unit is arranged to control the operation state of the position sensor so to maintain the temperature of the positioning device in a predetermined range.

As indicated above, the reduction of the amount of heat introduced into the positioning device may be employed to reach and maintain, basically, a particular temperature value.

In a further advantageous embodiment of an aspect of the invention, the control unit is arranged to control the operation state of the position sensor so to maintain the temperature of the positioning device within a predetermined range around a temperature value which changes in a predetermined manner over time. According to a modification of this aspect, the positioning device further comprises a temperature sensor coupled to the control unit, wherein the control unit is arranged to control the operation state based on a temperature detected by the temperature sensor.

In addition to the above, or in alternative to the above, the present invention may also be employed to make the positioning device follow a predetermined temperature program, e.g. a temperature cycle.

In a further advantageous embodiment of an aspect of the invention, the positioning device further comprises a cooling unit, in particular a cooling unit including a Peltier cooling unit, wherein the control unit is further arranged for controlling an operation state of the cooling unit so to adjust the temperature of the positioning device.

The introduction of a cooling unit gives an additional degree of freedom to the control of the temperature.

In a further advantageous embodiment of an aspect of the invention, the positioning device further comprises a temperature sensor coupled to the control unit.

According to the present invention, it is not always necessary to provide a dedicated temperature sensor. In particular, under known circumstances with relatively marginal outside or random influences, the temperature reaction of the positioning device to a particular control of the operation states of the position sensor may be predicted or calculated with sufficient accuracy, so that the temperature itself may not be detected in addition.

In an embodiment not employing a temperature sensor as such, the control unit may be configured to receive information about an initial temperature, e.g. about the surrounding temperature of the positioning device, as a reference point. However, the "temperature of the positioning device" does not necessarily have to be understood as indicating an absolute temperature value, but may rather also refer to a temperature relative to the (more or less immediate) environment of the positioning device or a particular reference in such environment. As far as relative temperature is concerned, there is then no need for information about an initial temperature, as one may assume, for example, that the positioning device, at the start of the operation, has the same temperature as its environment.

In a further advantageous embodiment of an aspect of the invention, the position sensor includes a thermistor and/or a bandgap temperature sensor coupled to the control unit.

A thermistor, i.e. an electric resistor exhibiting a resistance changing in a known way with temperature, and/or a bandgap temperature sensor, i.e. a PTAT semiconductor device (e.g. employing a voltage difference between p-n junctions operated at different current densities) may be integrated into the circuitry of the position sensor, whereas the connection(s) for driving the position sensor may then be used also for reading out the temperature information from the thermistor and/or bandgap temperature sensor, thus avoiding additional cabling for a separate temperature sensor which might otherwise be needed.

In a further advantageous embodiment of an aspect of the invention, the actuator is or comprises a piezoelectric or electrostrictive actuator.

While the present invention may particularly advantageously be implemented using one or more piezoelectric and/or electrostrictive actuators, the invention is not limited to such kind of positioning equipment and also other actuators may be used.

In a further advantageous embodiment of an aspect of the invention, the control unit is integrated in the position sensor.

The control unit, in the context of the present invention, may be provided separately from the area where the actual positioning takes place. For example, the actuator(s) and the position sensor(s) may be provide in a cryogenic environment, whereas the overall control and particularly the control unit are provided from outside such environment. However, the control unit may be, for example, part of the position sensor or included a common housing, so that the control of the operation state of the position sensor may be achieved from inside such position sensor including the control unit.

According to a further aspect of the invention, a computer program is proposed with computer program code means for causing a control unit of a positioning device according to the present invention to control an operation state of the position sensor of the positioning device according to present invention so to adjust a temperature of the positioning device, when the computer program is run on the control unit. The computer program may be provided, stored and/or distributed on a suitable medium, such as an optical storage medium or a non-volatile solid-state medium. The computer program may be supplied together with or as part of other hardware, but may also be distributed in other forms, such as via the Internet or other wired or wireless telecommunication systems.

Features of preferred embodiments of the invention are defined, in particular, in the dependent claims, while further advantageous features, embodiments and implementations are apparent to the skilled person from the above explanation and the following discussion.

In the following, the present invention is further elucidated and exemplified under reference to embodiments illustrated in the attached drawings, in which
- Fig. 1: shows a schematic representation for illustrating a first exemplary embodiment of a positioning device according to the invention,
- Fig. 2: shows a schematic representation for illustrating a second exemplary embodiment of a positioning device according to the invention, and
- Fig. 3: shows a schematic flow diagram of an exemplary embodiment of a method for closed-loop positioning according to the invention.

In the attached drawings and the explanations on these drawings elements, which are in relation or in correspondence, are indicated - where expedient - by corresponding or similar reference signs, regardless of whether or not the elements are part of the same embodiment.

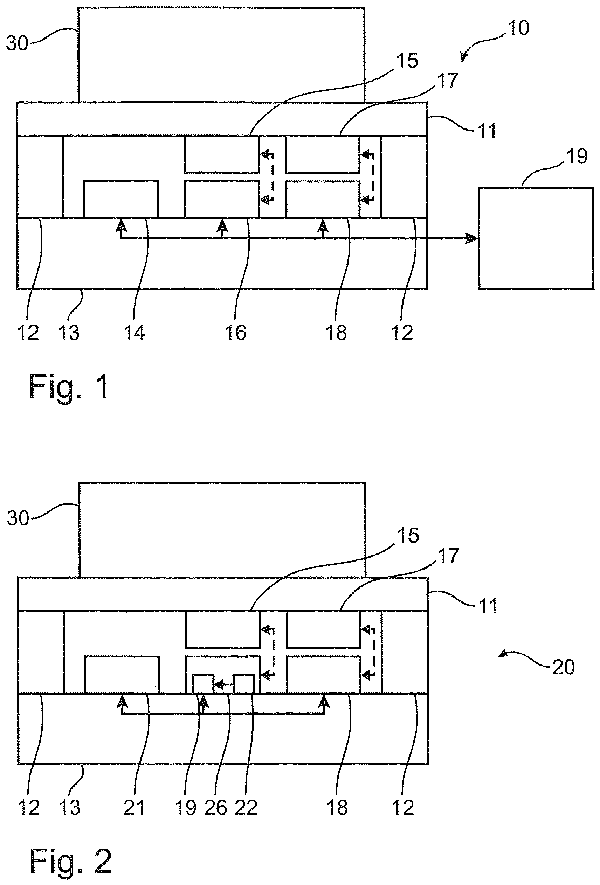

Fig. 1 shows a schematic representation for illustrating a first exemplary embodiment of a positioning device according to the invention.

The positioning device 10 includes a top plate 11, on which the object 30 to be positioned is located, and a base plate 13, wherein between the top plate 11 and the base plate 13 bearings 12 are provided, allowing for a relative movement of the top plate 11 and the base plate 13.

The positioning device 10 further includes a temperature sensor 14, a position sensor (constituted by a top part 15 arranged at the top plate 11 and a bottom part 16 arranged at the base plate 13) and a drive (constituted by a top part 17 arranged at the top plate 11 and a bottom part 18 arranged at the base plate 13).

The drive 17, 18 is provided to cause the relative movement between the top plate 11 and the base plate 13, so to position the object 30.

The position sensor 15, 16 is provided to detect the position of the object 30 (by detecting the relative position of the top plate 11 and the base plate 13 and/or by detecting a relative movement between the top plate 11 and the base plate 13).

The parts of the position sensor 15, 16 interact with each other (as illustrated by the dashed line), wherein this may just mean that the top part 15 is a scale, which is read by the bottom part 16.

Also, the parts of the drive 17, 18 interact with each other in the course of the positioning (as illustrated by the dashed line there between).

The temperature sensor 14 is arranged to detect a temperature inside the positioning device 10.

The temperature sensor 14, the position sensor 15, 16 and the drive 17, 18 are coupled with a control unit 19, wherein the control unit 19, in particular, receives sensing information from the temperature sensor 14 and sensing or detection information from the position sensor 15, 16 and controls the drive 17, 18.

Since the skilled person, as such, is familiar with such arrangement in general, so that a further explanation of the basic functionalities and operation of such positioning device 10 needs not to be explained further.

The control unit 19 is further arranged to control the operation state of the position sensor 15, 16, wherein the control unit 19 can use this to control the temperature in the positioning device 10. Simply put, by controlling the position sensor 15, 16 to be in an operational state in which little or no heat is generated by the position sensor 15, 16, the control unit 19 reduces the energy input into the positioning device 10, which would allow the positioning device 10 to come closer to its ambient temperature. By controlling the position sensor 15, 16 to be in another operational state (the position sensor 15, 16 may have multiple operational states, each having its distinctive heat generation) having a high (or higher) heat generation, there is more energy introduced into the area of the positioning device 10.

Thus, for example, based on the temperature detected by the temperature sensor 14, the control unit 19, may therefore adjust the temperature of the positioning device 10, whereas this may be achieved, in particular, by switching between the operational states with a "duty cycle" leading to a balance between heat (or energy) input due to the operation of the position sensor 15, 16 and heat dissipated, for example, by convention, cooling or other means.

Fig. 2 shows a schematic representation for illustrating a second exemplary embodiment of a positioning device according to the invention.

The basic arrangement of the positioning device 20 of the second embodiment corresponds to that shown in Fig. 1.

Other than in the case of Fig. 1, in this embodiment, however, the control unit 19 is integrated into the position sensor 15, 26, which, additionally, includes a thermistor 22, which allows to the functionality of the temperature sensor 14 of Fig. 1.

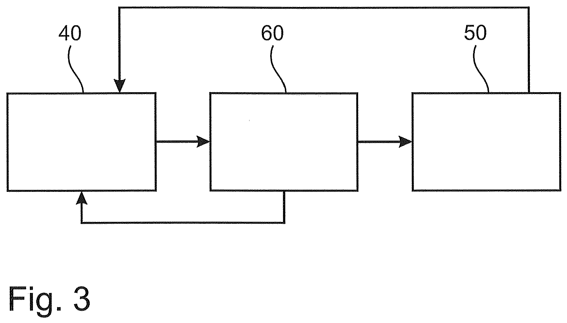

Fig. 3 shows a schematic flow diagram of an exemplary embodiment of a method for closed-loop positioning according to the invention.

The method as illustrated in Fig.3 includes a step 40 of positioning an object to be positioned by means of an actuator.

The operation state of a position sensor is controlled in a following step 60, wherein this is done to adjust the temperature of the positioning device used for positioning. This is possible because the position sensor has at least two operation states which differ in the amount of heat generated by the position sensor in such operation state, i.e. it is possible to change the amount of energy (averaged over time) which it introduced, due to the operation of the position sensor.

If the operation state of the position sensor is controlled to be "OFF" in step 60, the flow returns to step 40. Otherwise, a step 50 of detecting, directly or indirectly, a position of the object is provided by means of the position sensor, whereas, eventually, the flow also returns to step 40.

In this case, the provision of separate steps and their order is provided merely for illustrative purposes, whereas in actual implementations the respective operations and controls may be carried out in parallel and continuously.

Even if in the drawings different aspects or features of the invention are shown in combination, the skilled person will appreciate - unless indicated otherwise - that the combinations shown and discussed are not exhaustive and variations thereof are possible. In particular, corresponding elements or feature complexes may be mutually exchanges between different embodiments.

Additionally, it is noted that references to a single element, e.g. to an actuator, are to be understood as addressing also corresponding embodiments or implementations where one than one such element is provided, e.g. multiple actuators, unless otherwise apparent from the particular context. Equally, such element needs not necessarily be provided in integral form, e.g. an actuator may be provided in form of separate elements cooperating with each other.

### List of reference signs

- 10, 20: positioning device
- 11: top plate
- 12: bearings
- 13: base plate
- 14: temperature sensor
- 15: position sensor - top part
- 16, 26: position sensor - bottom part
- 17: positioning drive - top part
- 18: positioning drive - bottom part
- 19: control unit
- 21: cooling unit
- 22: thermistor
- 30: object
- 40: positioning
- 50: detecting
- 60: controlling

## Claims

1. A positioning device (10, 20) allowing for a closed-loop positioning of an object (30), comprising:
an actuator (17, 18) arranged for positioning the object (30),
a position sensor (15, 16, 26) arranged for directly or indirectly detecting a position of the object (30), and
a control unit (19) arranged for controlling an operation state of the position sensor (15, 16, 26),
wherein the position sensor (15, 16, 26) has at least two operation states which differ in the amount of heat generated by the position sensor (15, 16, 26) in such operation state, and
wherein the control unit (19) is arranged adjusting a temperature of the positioning device (10, 20) by controlling the operation state of the position sensor (15, 16, 26).

2. The positioning device (10, 20) according to claim 1,
wherein the at least two operation states include an active state in which the position sensor (15, 16, 26) detects the position of the object (30) and generates heat and an inactive state in which the position sensor (15, 16, 26) is unpowered and generates no heat or substantially no heat.

3. The positioning device (10, 20) according to any one of the preceding claims,
wherein the control unit (19) is arranged to switch between operation states of the position sensor (15, 16, 26) in accordance with an operation of the actuator (17, 18).

4. The positioning device (10, 20) according to any one of the preceding claims,
wherein the control unit (19) is arranged to control the operation state of the position sensor (15, 16, 26) so to maintain the temperature of the positioning device (10, 20) in a predetermined range.

5. The positioning device (10, 20) according to any one of the preceding claims,
wherein the control unit (19) is arranged to control the operation state of the position sensor (15, 16, 26) so to maintain the temperature of the positioning device (10, 20) within a predetermined range around a temperature value which changes in a predetermined manner over time.

6. The positioning device according to any one of the preceding claims,
further comprising a cooling unit (21), in particular a cooling unit (21) including a Peltier cooling unit (21),
wherein the control unit (19) is further arranged for controlling an operation state of the cooling unit (21) so to adjust the temperature of the positioning device (10, 20).

7. The positioning device (10, 20) according to any one of the preceding claims,
further comprising a temperature sensor (14, 22) coupled to the control unit (19).

8. The positioning device (20) according to any one of the preceding claims,
wherein the position sensor (15, 26) includes a thermistor (22) and/or a bandgap temperature sensor coupled to the control unit (19).

9. The positioning device (10, 20) according to any one of the preceding claims,
wherein the actuator (17, 18) is or comprises a piezoelectric or electrostrictive actuator.

10. The positioning device (20) according to any one of the preceding claims,
wherein the control unit (19) is integrated in the position sensor (15, 26).

11. A method for closed-loop positioning of an object (30), comprising:
positioning (40) the object (30) by means of an actuator (17, 18),
detecting (50), directly or indirectly, a position of the object (30) by means of a position sensor (15, 16, 26), the position sensor (15, 16, 26) having at least two operation states which differ in the amount of heat generated by the position sensor (15, 16, 26) in such operation state, and
adjusting a temperature of a positioning device (10, 20) used for positioning the object (30) by controlling (60) an operation state of the position sensor (15, 16, 26).

12. A computer program with computer program code means for causing a control unit (19) of the positioning device (10, 20) according to claim 1 to adjust a temperature of the positioning device (10, 20) by controlling an operation state of the position sensor (15, 16, 26) of the positioning device (10, 20) according to claim 1, when the computer program is run on the control unit (19).

## Patentansprüche

1. Positioniervorrichtung (10, 20), die eine Positionierung eines Objekts (30) in einem geschlossenen Kreislauf ermöglicht, mit:
einem Aktuator (17, 18), der zur Positionierung des Objekts (30) ausgestaltet ist,
einem Positionssensor (15, 16, 26), der ausgestaltet ist, direkt oder indirekt eine Position des Objekts (30) zu erfassen, und
einer Steuereinheit (19), die zur Steuerung eines Betriebszustands des Positionssensors (15, 16, 26) ausgestaltet ist,
wobei der Positionssensor (15, 16, 26) wenigstens zwei Betriebszustände aufweist, die sich in der von dem Positionssensor (15, 16, 26) im jeweiligen Betriebszustand erzeugten Wärmemenge unterscheiden, und
wobei die Steuereinheit (19) ausgestaltet ist, eine Temperatur der Positioniervorrichtung (10, 20) durch Steuern des Betriebszustands des Positionssensors (15, 16, 26) einzustellen.

2. Positioniervorrichtung (10, 20) nach Anspruch 1,
wobei die wenigstens zwei Betriebszustände einen aktiven Zustand, in dem der Positionssensor (15, 16, 26) die Position des Objekts (30) erfasst und Wärme erzeugt, und einen inaktiven Zustand umfassen, in dem der Positionssensor (15, 16, 26) nicht mit Leistung versorgt wird und keine oder im Wesentlichen keine Wärme erzeugt.

3. Positioniervorrichtung (10, 20) nach einem der vorstehenden Ansprüche,
wobei die Steuereinheit (19) ausgestaltet ist, zwischen Betriebszuständen des Positionssensors (15, 16, 26) nach Maßgabe eines Betriebs des Aktuators (17, 18) umzuschalten.

4. Positioniervorrichtung (10, 20) nach einem der vorstehenden Ansprüche,
wobei die Steuereinheit (19) ausgestaltet ist, den Betriebszustand des Positionssensors (15, 16, 26) so zu steuern, dass die Temperatur der Positioniervorrichtung (10, 20) in einem vorbestimmten Bereich gehalten wird.

5. Positioniervorrichtung (10, 20) nach einem der vorstehenden Ansprüche,
wobei die Steuereinheit (19) ausgestaltet ist, den Betriebszustand des Positionssensors (15, 16, 26) so zu steuern, dass die Temperatur der Positioniervorrichtung (10, 20) innerhalb eines vorbestimmten Bereichs um einen Temperaturwert herum gehalten wird, der sich in einer vorbestimmten Weise über die Zeit ändert.

6. Positioniervorrichtung nach einem der vorstehenden Ansprüche,
ferner mit einer Kühleinheit (21), insbesondere einer Kühleinheit (21), die eine Peltier-Kühleinheit (21) aufweist,
wobei die Steuereinheit (19) ferner ausgestaltet ist, einen Betriebszustand der Kühleinheit (21) zu steuern, um die Temperatur der Positioniervorrichtung (10, 20) einzustellen.

7. Positioniervorrichtung (10, 20) nach einem der vorstehenden Ansprüche,
ferner mit einen Temperatursensor (14, 22), der mit der Steuereinheit (19) gekoppelt ist.

8. Positioniervorrichtung (20) nach einem der vorstehenden Ansprüche,
wobei der Positionssensor (15, 26) einen Thermistor (22) und/oder einen Bandlückentemperatursensor aufweist, der mit der Steuereinheit (19) gekoppelt ist.

9. Positioniervorrichtung (10, 20) nach einem der vorstehenden Ansprüche,
wobei der Aktuator (17, 18) ein piezoelektrischer oder elektrostriktiver Aktuator ist oder einen solchen aufweist.

10. Positioniervorrichtung (20) nach einem der vorstehenden Ansprüche,
wobei die Steuereinheit (19) in den Positionssensor (15, 26) integriert ist.

11. Verfahren zur Positionierung eines Objekts (30) in einem geschlossenen Regelkreis, mit:
Positionieren (40) des Objekts (30) mit Hilfe eines Aktuators (17, 18),
Direktes oder indirektes Erfassen einer Position des Objekts (30) mittels eines Positionssensors (15, 16, 26), wobei der Positionssensor (15, 16, 26) wenigstens zwei Betriebszustände aufweist, die sich in der durch den Positionssensor (15, 16, 26) im jeweiligen Betriebszustand erzeugten Wärmemenge unterscheiden, und
Einstellen einer Temperatur einer Positioniervorrichtung (10, 20), die zum Positionieren des Objekts (30) verwendet wird, durch Steuern (60) eines Betriebszustands des Positionssensors (15, 16, 26).

12. Computerprogramm mit Computerprogrammcodemitteln, um eine Steuereinheit (19) der Positioniervorrichtung (10, 20) nach Anspruch 1 zu veranlassen, eine Temperatur der Positioniervorrichtung (10, 20) durch Steuern eines Betriebszustands des Positionssensors (15, 16, 26) der Positioniervorrichtung (10, 20) nach Anspruch 1 einzustellen, wenn das Computerprogramm auf der Steuereinheit (19) ausgeführt wird.

## Revendications

1. Dispositif de positionnement (10, 20) permettant un positionnement en boucle fermée d'un objet (30), comportant :
un actionneur (17, 18) agencé pour positionner l'objet (30),
un capteur de position (15, 16, 26) agencé pour détecter directement ou indirectement une position de l'objet (30), et
une unité de commande (19) agencée pour commander un état de fonctionnement du capteur de position (15, 16, 26),
dans lequel le capteur de position (15, 16, 26) présente au moins deux états de fonctionnement qui diffèrent par la quantité de chaleur générée par le capteur de position (15, 16, 26) dans un tel état de fonctionnement, et
dans lequel l'unité de commande (19) est agencée pour ajuster une température du dispositif de positionnement (10, 20) en commandant l'état de fonctionnement du capteur de position (15, 16, 26).

2. Dispositif de positionnement (10, 20) selon la revendication 1,
dans lequel les au moins deux états de fonctionnement incluent un état actif dans lequel le capteur de position (15, 16, 26) détecte la position de l'objet (30) et génère de la chaleur et un état inactif dans lequel le capteur de position (15, 16, 26) est hors tension et ne génère aucune chaleur ou sensiblement aucune chaleur.

3. Dispositif de positionnement (10, 20) selon l'une quelconque des revendications précédentes,
dans lequel l'unité de commande (19) est agencée pour commuter entre des états de fonctionnement du capteur de position (15, 16, 26) conformément à un fonctionnement de l'actionneur (17, 18).

4. Dispositif de positionnement (10, 20) selon l'une quelconque des revendications précédentes,
dans lequel l'unité de commande (19) est agencée pour commander l'état de fonctionnement du capteur de position (15, 16, 26) de manière à maintenir la température du dispositif de positionnement (10, 20) dans une plage prédéterminée.

5. Dispositif de positionnement (10, 20) selon l'une quelconque des revendications précédentes,
dans lequel l'unité de commande (19) est agencée pour commander l'état de fonctionnement du capteur de position (15, 16, 26) de manière à maintenir la température du dispositif de positionnement (10, 20) dans une plage prédéterminée autour d'une valeur de température qui change de manière prédéterminée au fil du temps.

6. Dispositif de positionnement selon l'une quelconque des revendications précédentes,
comportant en outre une unité de refroidissement (21), notamment une unité de refroidissement (21) incluant une unité de refroidissement (21) par effet Peltier,
dans lequel l'unité de commande (19) est en outre agencée pour commander un état de fonctionnement de l'unité de refroidissement (21) de manière à ajuster la température du dispositif de positionnement (10, 20).

7. Dispositif de positionnement (10, 20) selon l'une quelconque des revendications précédentes, comportant en outre un capteur de température (14, 22) couplé à l'unité de commande (19).

8. Dispositif de positionnement (20) selon l'une quelconque des revendications précédentes,
dans lequel le capteur de position (15, 26) inclut une thermistance (22) et/ou un capteur de température à bande interdite couplé à l'unité de commande (19).

9. Dispositif de positionnement (10, 20) selon l'une quelconque des revendications précédentes,
dans lequel l'actionneur (17, 18) est ou comporte un actionneur piézoélectrique ou électrostrictif.

10. Dispositif de positionnement (20) selon l'une quelconque des revendications précédentes,
dans lequel l'unité de commande (19) est intégrée dans le capteur de position (15, 26).

11. Procédé de positionnement en boucle fermée d'un objet (30), comportant :
le positionnement (40) de l'objet (30) au moyen d'un actionneur (17, 18),
la détection (50), directement ou indirectement, d'une position de l'objet (30) au moyen d'un capteur de position (15, 16), 26), le capteur de position (15, 16, 26) présentant au moins deux états de fonctionnement qui diffèrent par la quantité de chaleur générée par le capteur de position (15, 16, 26) dans un tel état de fonctionnement, et
l'ajustement d'une température d'un dispositif de positionnement (10, 20) utilisé pour positionner l'objet (30) en commandant (60) un état de fonctionnement du capteur de position (15, 16, 26).

12. Programme d'ordinateur avec des moyens de code de programme d'ordinateur pour amener une unité de commande (19) du dispositif de positionnement (10, 20) selon la revendication 1 à ajuster une température du dispositif de positionnement (10, 20) en commandant un état de fonctionnement du capteur de position (15, 16, 26) du dispositif de positionnement (10, 20) selon la revendication 1, lorsque le programme d'ordinateur est exécuté sur l'unité de commande (19).
